# EUROPÄISCHE PATENTSCHRIFT

(11) **EP 0 997 339 B1**
(45) Veröffentlichungstag und Bekanntmachung des Hinweises auf die Patenterteilung: **10.03.2004**
(21) Anmeldenummer: 99120541.0
(22) Anmeldetag: 15.10.1999
(51) Int. Cl.: B60L 9/28, B60L 11/12, H02M 5/45

(54) **Betriebsverfahren für ein elektrisch angetriebenes Schienenfahrzeug**
Operating method for an electric driven rail vehicle
Méthode de fonctionnement pour un véhicule ferroviaire

(30) Priorität: 28.10.1998 DE 19849763
(43) Veröffentlichungstag der Anmeldung: 03.05.2000
(73) Patentinhaber: SIEMENS AKTIENGESELLSCHAFT, 80333 München (DE)
(72) Erfinder: Walther, Michael, Dipl.-Ing., 41812 Erkelenz (DE); Wächter, Wolfgang, Dipl.-Ing., 90768 Fürth (DE)

(56) Entgegenhaltungen:
- EP-A- 0 637 121
- WO-A-93/22152
- DE-A- 4 322 146
- DE-A- 4 422 275
- DE-C- 19 617 048
- DATABASE NPL [Online] PETER GERBER: "Die Lokomotiven RE465 der BLS Lötschbergbahn" XP001057326

## Beschreibung

Die vorliegende Erfindung betrifft ein Betriebsverfahren für ein elektrisch angetriebenes Schienenfahrzeug,
- wobei eine erste Netzstromrichtereinheit getaktet wird, um elektrische Energie aus einem Wechselspannungsnetz in einen ersten Zwischenkreis einzuspeisen, so dass im ersten Zwischenkreis eine erste Zwischenkreisspannung herrscht,
- wobei eine erste Antriebsstromrichtereinheit getaktet wird, um elektrische Energie aus dem ersten Zwischenkreis in eine erste Antriebseinheit einzuspeisen, so dass die erste Antriebseinheit ein erstes Teilmoment abgibt,
- wobei eine zweite Netzstromrichtereinheit getaktet wird, um elektrische Energie aus dem Wechselspannungsnetz in einen zweiten Zwischenkreis einzuspeisen, so dass im zweiten Zwischenkreis eine zweite Zwischenkreisspannung herrscht,
- wobei eine zweite Antriebsstromrichtereinheit getaktet wird, um elektrische Energie aus dem zweiten Zwischenkreis in eine zweite Antriebseinheit einzuspeisen, so dass die zweite Antriebseinheit ein zweites Teilmoment abgibt,
- wobei das erste Teilmoment auf Null reduziert und das zweite Teilmoment auf die Summe von erstem und zweitem Teilmoment erhöht wird.

Ein derartiges Betriebsverfahren ist aus der Eisenbahn-Revue International 1-2/1995, Seiten 33 bis 49 bekannt. Gemäß dem dort beschriebenen Betriebsverfahren wird bei kleinen Gesamtmomenten dieses Gesamtmoment von der zweiten Antriebseinheit allein aufgebracht, während die erste Antriebseinheit bei aufgeladenem ersten Zwischenkreis mittels Taktsperre betriebsbereit gehalten wird. Hierdurch steht beim Erhöhen des angeforderten Gesamtmoments dieses sofort zur Verfügung.

Aus der DE 44 22 275 A1 ist ein Betriebsverfahren für ein elektrisch angetriebenes Schienenfahrzeug bekannt, bei dem eine Netzstromrichtereinheit getaktet wird, um elektrische Energie aus einem Wechselspannungsnetz in einen Zwischenkreis einzuspeisen, so dass im Zwischenkreis eine Zwischenkreisspannung herrscht. Eine Antriebsstromrichtereinheit wird getaktet, um elektrische Energie aus dem Zwischenkreis in eine Antriebseinheit einzuspeisen, so dass diese ein Drehmoment abgibt. Die Zwischenkreisspannung wird in Abhängigkeit von der Drehzahl und dem Drehmoment, das die Antriebsmotoren der Antriebseinheit abgeben sollen, variabel eingestellt.

Die Zwischenkreisspannungen im ersten und zweiten Zwischenkreis sind so hoch, daß die in den Stromrichtereinheiten eingesetzten Leistungshalbleiter durch die Schaltvorgänge altern.

Die Aufgabe der vorliegenden Erfindung besteht darin, ein Betriebsverfahren der eingangs genannten Art dahingehend zu verbessern, daß die Leistungshalbleiter möglichst wenig altern.

Die Aufgabe wird dadurch gelöst, daß nach dem Reduzieren des ersten Teilmoments auf Null die erste Netzstromrichtereinheit gesperrt wird und die erste Zwischenkreisspannung von einer Betriebsspannung auf eine Bereitschaftsspannung abgesenkt wird.

Auch bei gesperrter erster Netzstromrichtereinheit ist der erste Zwischenkreis über Freilaufdioden der ersten Netzstromrichtereinheit passiv an das Wechselspannungsnetz angeschlossen. Die Bereitschaftsspannung ist daher gleich dem Spitzenwert der eingangsseitig anstehenden Wechselspannung. Vorzugsweise wird daher die erste Netzstromrichtereinheit nach dem Sperren mittels einer vorgeschalteten mechanischen Schaltereinheit elektrisch vom Wechselspannungsnetz getrennt. In diesem Fall ist es nämlich möglich, die erste Zwischenkreisspannung weiter auf eine Hilfsbetriebespannung abzusenken.

Wenn in diesem Fall elektrische Energie von der ersten Antriebsstromrichtereinheit in den ersten Zwischenkreis rückgespeist wird, ist ein an den ersten Zwischenkreis angeschlossener Hilfsbetriebeumrichter auch nach dem Trennen der ersten Netzstromrichtereinheit vom Wechselspannungsnetz weiter aus dem ersten Zwischenkreis speisbar.

Nach dem Trennen der ersten Netzstromrichtereinheit vom Wechselspannungsnetz kann die erste Zwischenkreisspannung durch entsprechendes Takten der ersten Antriebsstromrichtereinheit geregelt werden.

Falls das Regeln der ersten Zwischenkreisspannung durch das entsprechende Takten der ersten Antriebsstromrichtereinheit nicht ausreicht, steigt die erste Zwischenkreisspannung an oder sie sinkt ab. Einem Ansteigen der ersten Zwischenkreisspannung kann dadurch entgegengewirkt werden, daß bei einem Ansteigen der ersten Zwischenkreisspannung über eine Bremsspannung ein an den ersten Zwischenkreis angeschlossener Bremssteller angesteuert wird. Ein Absinken der ersten Zwischenkreisspannung unter eine Minimalspannung kann ein Anzeichen für einen Kurzschluß sein. Um Beschädigungen vorzubeugen, wird daher vorzugsweise in diesem Fall die erste Antriebsstromrichtereinheit gesperrt. Sodann wird der erste Zwischenkreis aus dem Wechselspannungsnetz über mindestens einem Vorladewiderstand vorgeladen, die Schaltereinheit wieder geschlossen und dann die erste Netzstromrichtereinheit wieder getaktet.

Im Normalfall hingegen wird vor einem erneuten Takten der ersten Netzstromrichtereinheit die erste Zwischenkreisspannung wieder auf die Betriebsspannung erhöht. Falls die erste Netzstromrichtereinheit elektrisch vom Wechselspannungsnetz getrennt ist, wird die erste Netzstromrichtereinheit zwischen dem Erhöhen der ersten Zwischenkreisspannung und dem erneuten Takten der ersten Netzstromrichtereinheit wieder mit dem Wechselspannungsnetz verbunden.

Aufgrund physikalischer Grundsätze weist - bei ansonsten gleichen Belastungen - die Hinterachse eines Fahrzeugs bessere Traktionseigenschaften auf als die Vorderachse des Fahrzeugs. Wenn sich das Schienenfahrzeug in einer Fahrtrichtung bewegt, ist die Gefahr eines Durchdrehens von Rädern (= Schleudern) daher geringer, wenn die erste Antriebseinheit auf mindestens eine in Fahrtrichtung gesehen vordere und die zweite Antriebseinheit auf mindestens eine in Fahrtrichtung gesehen hintere Antriebsachse wirkt.

Wenn das Erhöhen des zweiten Teilmoments und das Reduzieren des ersten Teilmoments mittels einer Vorgabe von geführten Sollmomenten erfolgt, erfolgt ein kontrolliertes Erhöhen bzw. Reduzieren der Teilmomente. Die Sollwerte können beispielsweise linear ansteigen bzw. abfallen.

Weitere Vorteile und Einzelheiten ergeben sich aus der nachfolgenden Beschreibung eines Ausführungsbeispiels in Verbindung mit den Figuren. Dabei zeigen in Prinzipdarstellung:
- FIG 1: ein elektrisch angetriebenes Schienenfahrzeug,
- FIG 2: einen Stromversorgungsblock und
- FIG 3: ein Moment-Zeit-Diagramm

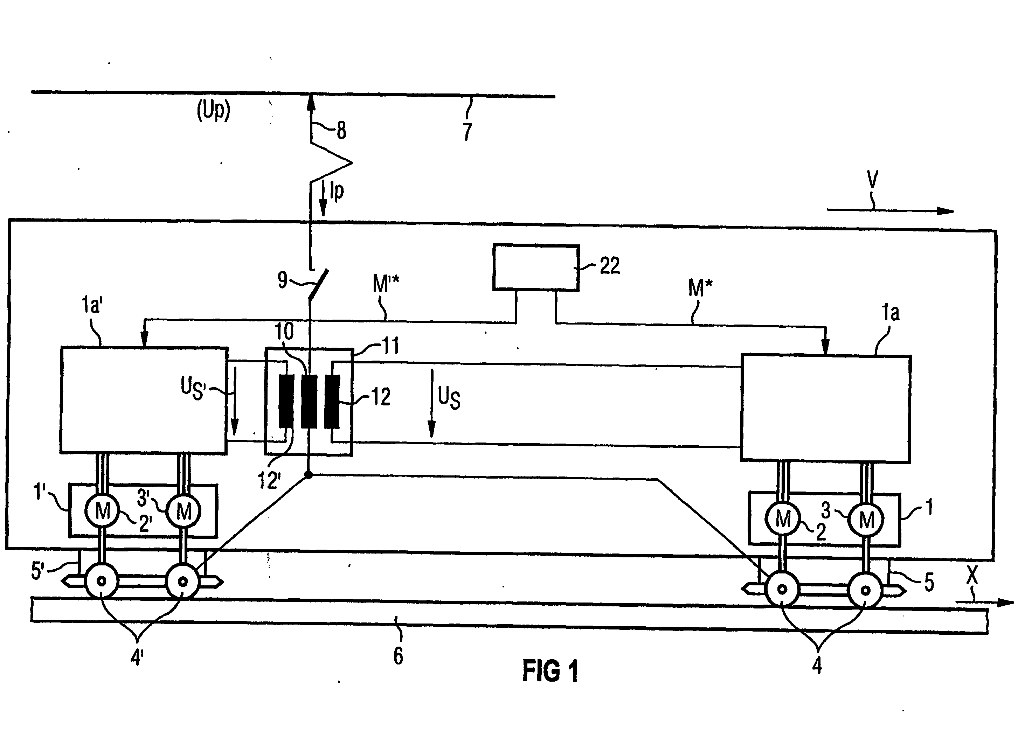

Gemäß FIG 1 weist eine Elektrolok als Beispiel eines elektrisch angetriebenen Schienenfahrzeugs eine erste Antriebseinheit 1 und eine zweite Antriebseinheit 1' auf. Jeder Antriebseinheit 1, 1' ist ein Stromversorgungsblock 1a, 1a' zugeordnet, aus dem je zwei Fahrmotoren 2, 3 bzw. 2', 3' mit elektrischer Energie versorgt werden. Jeder Fahrmotor 2, 3, 2', 3' wirkt auf je eine Antriebsachse 4, 4'. Die Antriebsachsen 4, 4' sind paarweise auf Drehgestellen 5, 5' angeordnet.

Die Elektrolok bewegt sich auf einer Schiene 6 mit einer Geschwindigkeit v in einer Fahrtrichtung x. Die erste Antriebseinheit 1 wirkt somit auf in Fahrtrichtung x gesehen vordere Antriebsachsen 4. Die zweite Antriebseinheit 1' wirkt auf zwei in Fahrtrichtung x gesehen hintere Antriebsachsen 4'.

Die Elektrolok wird aus einer Oberleitung 7 mit einer Wechselspannung UP versorgt. Die Oberleitung 7 stellt also einen Teil eines Wechselspannungsnetzes dar. Ihre Spannung beträgt beispielsweise 25 kV mit einer Netzfrequenz f von 50 Hz. Es wäre aber auch möglich, das Wechselspannungsnetz 7 mit einer anderen Wechselspannung UP von z.B. 15 kV und einer anderen Netzfrequenz von z.B. 16 2/3 Hz zu betreiben.

Die Elektrolok ist über einen Stromabnehmer 8 an die Oberleitung 7 angeschlossen. Folglich fließt ein Primärstrom IP über den Stromabnehmer 8 und einen Hauptschalter 9 durch eine Primärwicklung 10 eines Haupttransformators 11. Von dort fließt der Primärstrom IP weiter über sog. Raderdkontakte in die Schiene 6. Durch den Primärstrom IP werden in Sekundärwicklungen 12, 12' Sekundärspannungen US, US' erzeugt. Die Sekundärspannungen US, US' sind erheblich kleiner als die Primärspannung UP. Sie haben einen Effektivwert von z.B. 1500 V.

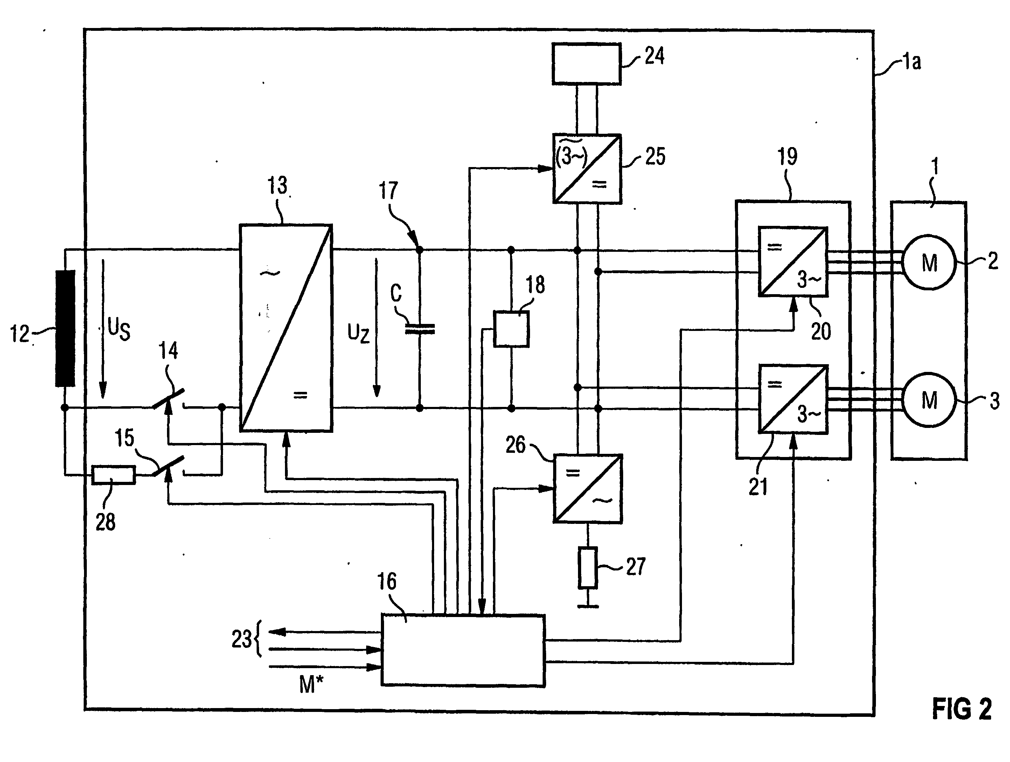

Um die aus dem Wechselspannungsnetz 7 eingespeiste elektrische Energie der ersten Antriebseinheit 1 zuzuführen, ist gemäß FIG 2 an die Sekundärwicklung 12 eine erste Netzstromrichtereinheit 13 angeschlossen. Eine Schaltereinheit 14 ist zu diesem Zeitpunkt selbstverständlich geschlossen, während ein Hilfsschalter 15 geöffnet ist. Die Schaltereinheit 14 ist der Netzstromrichtereinheit 13 vorgeschaltet und als mechanisches Schütz ausgebildet.

Die erste Netzstromrichtereinheit 13 wird von einer Steuereinheit 16 getaktet. Hierdurch wird elektrische Energie in einen ersten Zwischenkreis 17 eingespeist. Dabei wird im ersten Zwischenkreis 17 eine erste Zwischenkreisspannung UZ aufgebaut und gehalten. Zur kurzzeitigen Spannungspufferung ist im ersten Zwischenkreis 17 ein Zwischenkreiskondensator C angeordnet. Die Spannung UZ herrscht also im ersten Zwischenkreis 17. Die Zwischenkreisspannung UZ ist größer als die eingangsseitig an der ersten Netzstromrichtereinheit 13 anstehende Sekundärspannung US. Sie beträgt im Normalbetrieb z.B. 2600 V (= Betriebsspannung UB).

Die erste Zwischenkreisspannung UZ wird mittels einer Spannungsmeßeinrichtung 18 erfaßt und an die Steuereinheit 16 gemeldet. Diese korrigiert gegebenenfalls die Taktung der ersten Netzstromrichtereinheit 13, so daß die Zwischenkreisspannung UZ auf dem Wert von 2600 V gehalten wird. Die erste Zwischenkreisspannung UZ wird also durch entsprechendes Takten der ersten Netzstromrichtereinheit 13 geregelt.

An den Zwischenkreis 17 ist eine erste Antriebsstromrichtereinheit 19 angeschlossen. Die erste Antriebsstromrichtereinheit 19 weist zwei Pulswechselrichter 20, 21 auf. Je einer der Pulswechselrichter 20, 21 ist je einem der Fahrmotoren 2, 3 der ersten Antriebseinheit 1 zugeordnet. Die Pulswechselrichter 20, 21 werden ebenfalls von der Steuereinheit 16 angesteuert. Sie werden derart getaktet, daß elektrische Energie aus dem ersten Zwischenkreis 17 in die Fahrmotoren 2, 3 der ersten Antriebseinheit 1 eingespeist wird. Die Fahrmotoren 2, 3 der ersten Antriebseinheit 1 geben hierdurch zusammen ein erstes Teilmoment M ab.

Um die Pulswechselrichter 20, 21 richtig ansteuern zu können, muß der Steuereinheit 16 bekannt sein, welches erstes Sollmoment M* die erste Antriebseinheit 1 abgeben soll. Dieses Sollmoment M* wird der Steuereinheit 16 daher von einer Zentralsteuerung 22 (s. FIG 1) vorgegeben. Der Steuereinheit 16 werden von der Zentralsteuerung 22 auch andere Befehle eingegeben. Ferner übermittelt die Steuereinheit 16 Zustandsmeldungen an die Zentralsteuerung 22. Dies ist in FIG 2 durch Pfeile 23 angedeutet.

Der in FIG 2 dargestellte Stromversorgungsblock 1a ist in gleicher Ausgestaltung auch für die zweite Antriebseinheit 1' vorhanden. Alles was vorstehend und auch nachfolgend in Verbindung mit FIG 2 zum Aufbau des Stromversorgungsblocks 1a gesagt wurde und wird, gilt daher analog auch für den Stromversorgungsblock 1a'. Insbesondere wird auch dem zweiten Stromversorgungsblock 1a' ein zweites Sollmoment M'* vorgegeben, damit die zweite Antriebseinheit 1' ein zweites Teilmoment M' abgibt.

Wenn keine Störungen vorliegen, sind in der Regel die Sollmomente M*, M'* gleich. In bestimmten Fahrzuständen aber, auf die später noch näher eingegangen wird, wird das erste Teilmoment M auf Null reduziert und das zweite Teilmoment M' auf die Summe von erstem und zweitem Teilmoment M, M' erhöht. Dies geschieht dadurch, daß die Zentralsteuerung 22 die korrespondierenden Sollmomente M*, M'* linear anhebt bzw. absenkt. Die Sollmomente M*, M'* werden also den Steuereinheiten 16 (bzw. 16') geführt vorgegeben. Die tatsächlich abgegebenen Teilmomente M, M' werden dann von den Steuereinheiten 16, 16' entsprechend eingeregelt.

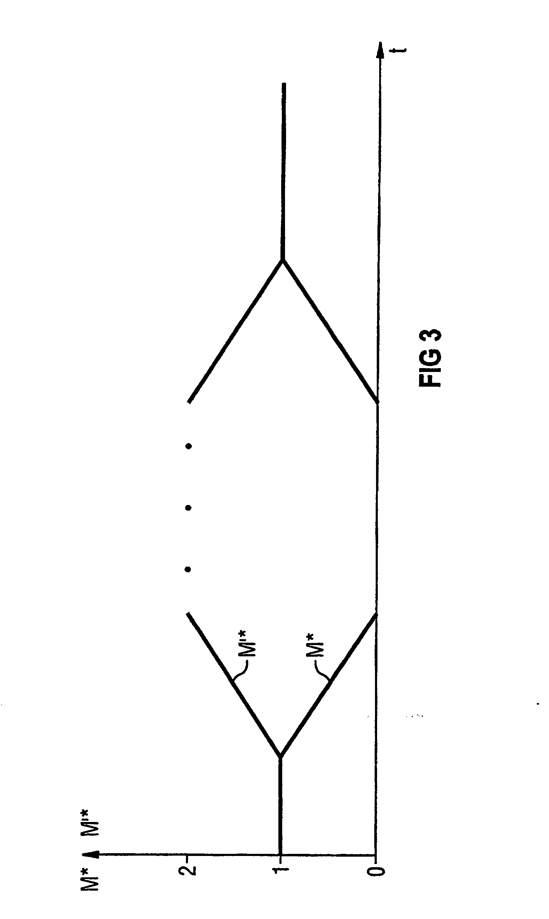

Schematisch ist dies in FIG 3 dargestellt. Die Sollmomente M*, M'* werden gemäß FIG 3 mit fortschreitender Zeit t derart angehoben bzw. abgesenkt, daß die vom zweiten Drehgestell 5' aufgebrachte Zugkraft pro Sekunde um 20 kN steigt und die vom ersten Drehgestell 5 aufgebrachte Zugkraft parallel hierzu pro Sekunde um 20 kN fällt.

Danach wird die erste Stromrichtereinheit 13 von der Steuereinheit 16 nicht mehr angesteuert. Sie wird also nicht mehr getaktet bzw. gesperrt. Die Fahrmotoren 2, 3 hingegen bleiben aufmagnetisiert, arbeiten aber nicht generatorisch. Wegen der nach wie vor bestehenden Ankopplung des ersten Zwischenkreises 17 an die Sekundärwicklung 12 über nicht dargestellte Freilaufdioden, die in der ersten Netzstromrichtereinheit 13 angeordnet sind, sinkt die erste Zwischenkreisspannung UZ auf eine Bereitschaftsspannung UBe ab. Die Bereitschaftsspannung UBe ist dabei durch den Spitzenwert der Sekundärspannung US gegeben. Sie beträgt ca. 2100 V.

Die Elektrolok weist Hilfsbetriebe 24 auf, z.B. Lüfter, Heizungen und Meßgeräte. Diese Hilfsbetriebe 24 müssen auch bei gesperrter ersten Netzstromrichtereinheit 13 weiter aus dem ersten Zwischenkreis 17 mit Energie versorgt werden. Dies geschieht durch entsprechendes Takten eines Hilfsbetriebeumrichters 25 durch die Steuereinheit 16. Solange die Schaltereinheit 14 geschlossen ist, stellt dies kein Problem dar, da, wie bereits erwähnt, der erste Zwischenkreis 17 weiterhin an die erste Sekundärwicklung 12 angekoppelt ist.

Wenn die Geschwindigkeit der Elektrolok oberhalb einer Trenngeschwindigkeit vT liegt, wird ferner die Schaltereinheit 14 nach dem Sperren der ersten Netzstromrichtereinheit 13 geöffnet. Hierdurch wird die erste Netzstromrichtereinheit 13 elektrisch vom Wechselspannungsnetz 7 getrennt. Die Trenngeschwindigkeit vT liegt im Bereich zwischen 30 km/h und 60 km/h, z.B. bei 40 km/h.

Nunmehr kann der Hilfsbetriebeumrichter 25 nicht mehr aus dem Wechselspannungsnetz 7 versorgt werden. Daher wird durch entsprechendes Ansteuern der ersten Antriebsstromrichtereinheit 19 elektrische Energie in den ersten Zwischenkreis 17 rückgespeist. Hierdurch ist der Hilfsbetriebeumrichter 25 weiterhin aus dem ersten Zwischenkreis 17 speisbar. Aufgrund der Abkopplung des ersten Zwischenkreises 17 von der Sekundärwicklung 12 kann nunmehr aber die erste Zwischenkreisspannung UZ weiter auf eine Hilfsbetriebespannung UH abgesenkt werden. Die Hilfsbetriebespannung UH liegt beispielsweise bei 1800 V. Sie wird durch entsprechendes Takten der ersten Antriebsstromrichtereinheit 19 geregelt. Je nach vom Hilfsbetriebeumrichter 25 benötigter Leistung kann dabei gegebenenfalls nur einer der Pulswechselrichter 20, 21 angesteuert werden, während der andere gesperrt bleibt.

Falls trotz der Spannungsregelung die erste Zwischenkreisspannung UZ über eine Bremsspannung UBr steigt, wird von der Steuereinheit 16 ein Bremssteller 26 angesteuert. Hierdurch wird elektrische Energie aus dem ersten Zwischenkreis 17 in einen Bremswiderstand 27 eingespeist und dort in Wärme umgesetzt. Die Bremsspannung UBr beträgt beispielsweise 2100 V.

Wenn hingegen die erste Zwischenkreisspannung UZ unter eine Miminalspannung UM absinkt, könnte ein Kurzschluß aufgetreten sein. Zum Schutz der Pulswechselrichter 20, 21 wird daher in diesem Fall die erste Antriebsstromrichtereinheit 19 gesperrt. Sodann wird der Hilfsschalter 15 geschlossen. Hierdurch wird der erste Zwischenkreis 17 aus dem Wechselspannungsnetz 7 über einen Vorladewiderstand 28 auf den Spitzenwert der Sekundärspannung US vorgeladen. Nach erfolgter Vorladung wird die Schaltereinheit 14 geschlossen und der Hilfsschalter 15 wieder geöffnet. Danach wird die erste Netzstromrichtereinheit 13 wieder von der Steuereinheit 16 getaktet. Die Miminalspannung UM beträgt beispielsweise 1500 V.

Wenn aufgrund anderer Anforderungen die Fahrmotoren 2, 3 der ersten Antriebseinheit 1 wieder ein Teilmoment M abgeben sollen, wird zunächst die erste Zwischenkreisspannung UZ wieder auf die Betriebsspannung, gemäß Ausführungsbeispiel also 2600 V, erhöht. Falls die Schaltereinheit 14 geöffnet sein sollte, wird diese frühestens bei Erreichen der Bereitschaftsspannung UBe (= 2100 V) geschlossen. Die erste Netzstromrichtereinheit 13 wird hierdurch gegebenenfalls wieder mit dem Wechselspannungsnetz 7 verbunden. Danach wird die erste Netzstromrichtereinheit 13 von der Steuereinheit 16 wieder getaktet.

Die Umverteilung der Teilmomente M, M' mit nachfolgendem Sperren der ersten Netzstromrichtereinheit 13 und Absenken der ersten Zwischenkreisspannung UZ auf die Bereitschaftsspannung UBe geschieht unter folgenden Bedingungen:
a) Seit dem letzten Schleudern einer Antriebsachse 4, 4' muß eine Schleuderwartezeit vergangen sein. Die Schleuderwartezeit beträgt typisch zwischen 20 s und 60 s. Gemäß Ausführungsbeispiel liegt sie bei 30 s.
b) Die Stromrichter 13, 19 sowie die Antriebseinheiten 1, 1' werden auf Übertemperatur überwacht. Eine Freigabe zur Lastumverteilung erfolgt nur dann, wenn kritische Temperaturen nicht überschritten werden. Gegebenenfalls können dabei die Temperaturen für die Stromrichter 13, 19 und die Antriebseinheiten 1, 1' voneinander verschieden sein.
c) Die Stromrichter 13, 19 und die Antriebseinheiten 1, 1' werden mit Lüftern zwangsgekühlt. Die Lüfter müssen ordnungsgemäß arbeiten.
d) Seit dem Beginn der letzten Antaktung der ersten Netzstromrichtereinheit 13 muß eine Taktzeit vergangen sein. Die Taktzeit liegt typisch zwischen 3 s und 20 s. Gemäß Ausführungsbeispiel beträgt sie 6 s.
e) Seit dem letzten Schließen der Schaltereinheit 14 muß eine Schließzeit vergangen sein. Die Schließzeit ist größer als die Taktzeit. Sie beträgt beispielsweise zwischen 20 s und 120 s. Gemäß Ausführungsbeispiel beträgt sie 60 s.
f) Selbstverständlich darf keine Betriebsstörung vorliegen. Ferner darf kein Bremsbefehl vorgegeben sein.
g) Die Geschwindigkeit v muß eine Mindestgeschwindigkeit vM überschreiten. Die Mindestgeschwindigkeit vM liegt üblicherweise im Bereich 5 km/h und 20 km/h. Gemäß Ausführungsbeispiel beträgt sie 10 km/h.
h) Die Summe der Sollmomente M*, M'* muß unterhalb eines Umschaltmoments liegen. Das Umschaltmoment kann dabei geschwindigkeitsabhängig sein. Liegt die Geschwindigkeit v unterhalb einer Schwellengeschwindigkeit vS, erfolgt nur dann eine Lastumverteilung, wenn die Summe der Sollmomente M*, M'* ein unteres Umschaltmoment nicht übersteigt. Ansonsten erfolgt das Abschalten der ersten Antriebseinheit 1 nur dann, wenn ein oberes Umschaltmoment nicht überschritten wird. Die Schwellengeschwindigkeit vS liegt üblicherweise im Bereich zwischen 50 km/h und 100 km/h. Gemäß Ausführungsbeispiel liegt sie bei 60 km/h. Das untere Umschaltmoment liegt typischerweise im Bereich zwischen 25% und 40% des maximal möglichen Moments, z.B. bei 30%. Das obere Umschaltmoment liegt niedriger. Es liegt typisch zwischen 5% und 20% des maximalen Moments. Gemäß Ausführungsbeispiel liegt es bei 10%.

Das Zuschalten der ersten Antriebseinheit 1 erfolgt umgekehrt zum Abschalten der ersten Antriebseinheit 1. Nach dem Wiederhochfahren der ersten Zwischenkreisspannung UZ und dem Wiederantakten der ersten Netzstromrichtereinheit 13 werden daher - siehe FIG 3 - die Sollmomente M*, M'* linear angehoben bzw. abgesenkt. Diese geführten Sollmomente M*, M'* werden von der Zentralsteuerung 22 den Steuereinheiten 16, 16' vorgegeben.

Zur Vermeidung eines dauernden Wechsels zwischen Zuschalten und Abschalten der ersten Netzstromrichtereinheit 13 erfolgt das Zuschalten vorzugsweise erst dann, wenn ein Rückschaltmoment überschritten wird, welches oberhalb des Umschaltmoments liegt. Wenn die Geschwindigkeit v unterhalb der Schwellengeschwindigkeit vS liegt, kann ein unteres Rückschaltmoment beispielsweise zwischen 35% und 45% des maximalen Moments liegen. Gemäß Ausführungsbeispiel liegt das untere Rückschaltmoment bei 40%. Liegt die Geschwindigkeit v oberhalb der Schwellengeschwindigkeit vS, so erfolgt ein Wiederantakten der ersten Netzstromrichtereinheit 13 bereits, wenn ein oberes Rückschaltmoment überschritten wird. Das obere Rückschaltmoment liegt üblicherweise zwischen 20% und 30% des maximalen Moments. Gemäß Ausführungsbeispiel liegt es bei 25%. Im übrigen erfolgt ein Wiederantakten der ersten Netzstromrichtereinheit 13, wenn die entsprechende Sperrbedingung (z.B.: kein Bremsbefehl, keine Übertemperaturen, keine Betriebsstörung) entfällt.

## Patentansprüche

1. Betriebsverfahren für ein elektrisch angetriebenes Schienenfahrzeug,
- wobei eine erste Netzstrortrichtereinheit (13) getaktet wird, um elektrische Energie aus einem Wechselspannungsnetz (7) in einen ersten Zwischenkreis (17) einzuspeisen, so daß im ersten Zwischenkreis (17) eine erste Zwischenkreisspannung (UZ) herrscht,
- wobei eine erste Antriebsstromrichtereinheit (19) getaktet wird, um elektrische Energie aus dem ersten Zwischenkreis (17) in eine erste Antriebseinheit (1) einzuspeisen, so daß die erste Antriebseinheit (1) ein erstes Teilmoment (M) abgibt,
- wobei eine zweite Netzstromrichtereinheit getaktet wird, um elektrische Energie aus dem Wechselspannungsnetz (7) in einen zweiten Zwischenkreis einzuspeisen, so daß im zweiten Zwischenkreis eine zweite Zwischenkreisspannung herrscht,
- wobei eine zweite Antriebsstromrichtereinheit getaktet wird, um elektrische Energie aus dem zweiten Zwischenkreis in eine zweite Antriebseinheit (1') einzuspeisen, so daß die zweite Antriebseinheit (1') ein zweites Teilmoment (M') abgibt,
- wobei das erste Teilmoment (M) auf Null reduziert und das zweite Teilmoment (M') erhöht wird, wobei die Summe von erstem und zweitem Teilmoment (M, M') konstant bleibt,
**dadurch gekennzeichnet,**
**daß** nach dem Reduzieren des ersten Teilmoments (M) auf Null die erste Netzstromrichtereinheit (13) gesperrt wird und die erste Zwischenkreisspannung (UZ) von einer Betriebsspannung (UB) auf eine Bereitschaftsspannung (UBe) abgesenkt wird.

2. Betriebsverfahren nach Anspruch 1,
**dadurch gekennzeichnet,**
**daß** die erste Netzstromrichtereinheit (13) nach dem Sperren mittels einer vorgeschalteten mechanischen Schaltereinheit (14) elektrisch vom Wechselspannungsnetz (7) getrennt wird.

3. Betriebsverfahren nach Anspruch 2,
**dadurch gekennzeichnet,**
**daß** die erste Zwischenkreisspannung (UZ) weiter auf eine Hilfsbetriebespannung (UH) abgesenkt wird.

4. Betriebsverfahren nach Anspruch 2 oder 3,
**dadurch gekennzeichnet,**
**daß** elektrische Energie von der ersten Antriebsstromrichtereinheit (19) in den ersten Zwischenkreis (17) rückgespeist wird, so daß ein an den ersten Zwischenkreis (17) angeschlossener Hilfsbetriebeumrichter (25) auch nach dem Trennen der ersten Netzstromrichtereinheit (13) vom Wechselspannungsnetz (7) weiter aus dem ersten Zwischenkreis (17) speisbar ist.

5. Betriebsverfahren nach Anspruch 2, 3 oder 4,
**dadurch gekennzeichnet,**
**daß** die erste Zwischenkreisspannung (UZ) durch entsprechendes Takten der ersten Antriebsstromrichtereinheit (19) geregelt wird.

6. Betriebsverfahren nach einem der Ansprüche 2 bis 5,
**dadurch gekennzeichnet,**
**daß** bei einem Ansteigen der ersten Zwischenkreisspannung (UZ) über eine Bremsspannung (UBr) ein an den ersten Zwischenkreis (17) angeschlossener Bremssteller (26) angesteuert wird.

7. Betriebsverfahren nach einem der Ansprüche 2 bis 6,
**dadurch gekennzeichnet,**
**daß** bei einem Absinken der ersten Zwischenkreisspannung (UZ) unter eine Minimalspannung (UM) die erste Antriebsstromrichtereinheit (19) gesperrt wird, der erste Zwischenkreis (17) aus dem Wechselspannungsnetz (7) über mindestens einen Vorladewiderstand (28) vorgeladen wird, die Schaltereinheit (14) wieder geschlossen wird und dann die erste Netzstromrichtereinheit (13) wieder getaktet wird.

8. Betriebsverfahren nach einem der Ansprüche 1 bis 6,
**dadurch gekennzeichnet,**
**daß** vor einem erneuten Takten der ersten Netzstromrichtereinheit (13) die erste Zwischenkreisspannung (UZ) wieder auf die Betriebsspannung (UB) erhöht wird.

9. Betriebsverfahren nach Anspruch 2 und 8,
**dadurch gekennzeichnet,**
**daß** zwischen dem Erhöhen der ersten Zwischenkreisspannung (UZ) und dem erneuten Takten der ersten Netzstromrichtereinheit (13) die erste Netzstromrichtereinheit (13) wieder mit dem Wechselspannungsnetz (7) verbunden wird.

10. Betriebsverfahren nach einem der obigen Ansprüche,
**dadurch gekennzeichnet,**
- **daß** sich das Schienenfahrzeug in einer Fahrtrichtung (x) bewegt,
- **daß** die erste Antriebseinheit (1) auf mindestens eine in Fahrtrichtung (x) gesehen vordere Antriebsachse (4) wirkt und
- **daß** die zweite Antriebseinheit (1') auf mindestens eine in Fahrtrichtung (x) gesehen hintere Antriebsachse (4') wirkt.

11. Betriebsverfahren nach einem der obigen Ansprüche,
**dadurch gekennzeichnet,**
**daß** das Reduzieren des ersten Teilmoments (M) und das Erhöhen des zweiten Teilmoments (M') mittels einer Vorgabe von geführten Sollmomenten (M*, M'*) erfolgt.

12. Betriebsverfahren nach Anspruch 11,
**dadurch gekennzeichnet,**
**daß** die Sollmomente (M*, M'*) linear ansteigen bzw. abfallen.

## Claims

1. Operating method for an electrically driven rail vehicle,
- wherein a first mains power converter unit (13) is clocked, in order to feed electrical energy from an AC mains supply (7) into a first intermediate circuit (17), so that a first intermediate circuit voltage (UZ) prevails in the first intermediate circuit (17),
- wherein a first drive power converter unit (19) is clocked, in order to feed electrical energy from the first intermediate circuit (17) into a first drive unit (1), so that the first drive unit (1) delivers a first partial moment (M),
- wherein a second mains power converter unit is clocked, in order to feed electrical energy from the AC mains supply (7) into a second intermediate circuit, so that a second intermediate circuit voltage prevails in the second intermediate circuit,
- wherein a second drive power converter unit is clocked, in order to feed electrical energy from the second intermediate circuit into a second drive unit (1'), so that the second drive unit (1') delivers a second partial moment (M'),
- wherein the first partial moment (M) is reduced to zero and the second partial moment (M') is increased, the sum of the first and the second partial moments (M, M') remaining constant,
**characterised in that** after the first partial moment (M) has been reduced to zero the first mains power converter unit (13) is blocked and the first intermediate circuit voltage (UZ) is lowered from an operating voltage (UB) to a standby voltage (UBe).

2. Operating method according to claim 1,
**characterised in that**, after blocking, the first mains power converter unit (13) is electrically separated from the AC mains supply (7) by means of a mechanical switch unit (14) connected upstream.

3. Operating method according to claim 2,
**characterised in that** the first intermediate circuit voltage (UZ) is further lowered to an auxiliary operating voltage (UH).

4. Operating method according to claim 2 or 3,
**characterised in that** electrical energy is fed back from the first drive power converter unit (19) into the first intermediate circuit (17), so that an auxiliary operating frequency converter (25) connected to the first intermediate circuit (17) can still continue to be fed from the first intermediate circuit (17) even after separation of the first mains power converter unit (13) from the AC mains supply (7).

5. Operating method according to claim 2, 3 or 4,
**characterised in that** the first intermediate circuit voltage (UZ) is controlled by appropriate clocking of the first drive power converter unit (19).

6. Operating method according to one of claims 2 to 5,
**characterised in that** when the first intermediate circuit voltage (UZ) increases above a deceleration voltage (UBr) a deceleration regulator (26) connected to the first intermediate circuit (17) is triggered.

7. Operating method according to one of claims 2 to 6,
**characterised in that** if the first intermediate circuit voltage (UZ) drops below a minimum voltage (UM) the first drive power converter unit (19) is blocked, the first intermediate circuit (17) is pre-charged from the AC mains supply (7) via at least one pre-charging resistor (28), the switch unit (14) is closed again and then the first mains power converter unit (13) is clocked again.

8. Operating method according to one of claims 1 to 6,
**characterised in that** before renewed clocking of the first mains power converter unit (13) the first intermediate circuit voltage (UZ) is increased to the operating voltage (UB) again.

9. Operating method according to claims 2 and 8,
**characterised in that** between increasing the first intermediate circuit voltage (UZ) and renewed clocking of the first mains power converter unit (13) the first mains power converter unit (13) is connected to the AC mains supply (7) again.

10. Operating method according to one of the above claims, **characterised in that**
- the rail vehicle moves in a direction of travel (x),
- the first drive unit (1) acts on at least one front drive axle (4), seen in the direction of travel (x),
- the second drive unit (1') acts on at least one rear drive axle (4'), seen in the direction of travel (x).

11. Operating method according to one of the above claims, **characterised in that** reducing the first partial moment (M) and increasing the second partial moment (M') is done by means of a default of directed desired moments (M*, M'*).

12. Operating method according to claim 11,
**characterised in that** the desired moments (M*, M'*) rise or fall linearly.

## Revendications

1. Procédé pour faire fonctionner un véhicule ferroviaire à entraînement électrique, dans lequel
- une première unité de convertisseur de réseau (13) est commandée en vue de fournir de l'énergie électrique provenant d'un réseau d'alimentation en tension alternative (7) à un premier circuit intermédiaire (17) de sorte qu'une première tension de circuit intermédiaire (UZ) règne dans le premier circuit intermédiaire (17),
- une première unité de convertisseur d'entraînement (19) est commandée en vue de fournir de l'énergie électrique provenant du premier circuit intermédiaire (17) à une première unité d'entraînement (1) de sorte que la première unité d'entraînement (1) délivre un premier couple partiel (M),
- une deuxième unité de convertisseur de réseau est commandée en vue de fournir de l'énergie électrique provenant d'un réseau d'alimentation en tension alternative (7) à un deuxième circuit intermédiaire de sorte qu'une deuxième tension de circuit intermédiaire règne dans le premier circuit intermédiaire,
- une deuxième unité de convertisseur d'entraînement est commandée en vue de fournir de l'énergie électrique provenant du deuxième circuit intermédiaire à une deuxième unité d'entraînement (1') de sorte que la deuxième unité d'entraînement (1') délivre un deuxième couple partiel (M'),
- le premier couple partiel (M) est réduit à zéro et le deuxième couple partiel (M') est élevé, la somme des premier et deuxième couples partiels (M, M') restant constante,
**caractérisé en ce que**, après avoir réduit le premier couple partiel (M) à zéro, la première unité de convertisseur de réseau (13) est verrouillée et la première tension de circuit intermédiaire (UZ) est abaissée d'une tension de fonctionnement (UB) à une tension de réserve (UBe).

2. Procédé pour faire fonctionner selon la revendication 1, **caractérisé en ce que** la première unité de convertisseur de réseau (13) est séparée électriquement du réseau d'alimentation en tension alternative (7) après le verrouillage au moyen de l'unité de commutateurs mécaniques (14) montée en amont.

3. Procédé pour faire fonctionner selon la revendication 2, **caractérisé en ce que** la première tension de circuit intermédiaire (UZ) est de nouveau abaissée à une tension de fonctionnement auxiliaire (UH).

4. Procédé pour faire fonctionner selon la revendication 2 ou 3, **caractérisé en ce que** l'énergie électrique est ramenée de la première unité de convertisseur d'entraînement (19) au premier circuit intermédiaire (17) de sorte qu'un convertisseur de fonctionnement auxiliaire (25) raccordé au premier circuit intermédiaire (17) peut encore être alimenté par le premier circuit intermédiaire (17) même après avoir séparé la première unité de convertisseur de réseau (13) du réseau d'alimentation en tension alternative (7).

5. Procédé pour faire fonctionner selon la revendication 2, 3 ou 4, **caractérisé en ce que** la première tension de circuit intermédiaire (UZ) peut être régulée en commandant de façon appropriée la première unité de convertisseur d'entraînement (19).

6. Procédé pour faire fonctionner selon l'une des revendications 2 à 5, **caractérisé en ce qu'**un actionneur de freinage (26) raccordé au premier circuit intermédiaire (17) est commandé par une tension de freinage (UBr) lorsque la première tension de circuit intermédiaire (UZ) augmente.

7. Procédé pour faire fonctionner selon l'une des revendications 2 à 6, **caractérisé en ce que** la première unité de convertisseur d'entraînement (19) est verrouillée lorsque la première tension de circuit intermédiaire (UZ) est abaissée au-dessous d'une tension minimale (UM), le premier circuit intermédiaire (17) est préchargé par le réseau d'alimentation en tension alternative (7) via une résistance de précharge (28), l'unité de commutateurs (14) est de nouveau fermée puis la première unité de convertisseur de réseau (13) est de nouveau commandée.

8. Procédé pour faire fonctionner selon l'une des revendications 1 à 6, **caractérisé en ce que** la première tension de circuit intermédiaire (UZ) est de nouveau élevée à la tension de fonctionnement (UB) avant de commander de nouveau la première unité de convertisseur de réseau (13).

9. Procédé pour faire fonctionner selon les revendications 2 et 8, **caractérisé en ce que** la première unité de convertisseur de réseau (13) est de nouveau reliée au réseau d'alimentation en tension alternative (7) entre l'élévation de la première tension de circuit intermédiaire (UZ) et la nouvelle commande de la première unité de convertisseur de réseau (13).

10. Procédé pour faire fonctionner selon l'une des revendications précédentes, **caractérisé en ce que**
- le véhicule ferroviaire se déplace dans un sens de roulement (x),
- la première unité d'entraînement (1) agit sur au moins un essieu d'entraînement avant (4) par référence au sens de roulement (x) et
- la deuxième unité d'entraînement (1') agit sur au moins un essieu d'entraînement arrière (4') par référence au sens de roulement (x).

11. Procédé pour faire fonctionner selon l'une des revendications précédentes, **caractérisé en ce que** la réduction du premier couple partiel (M) et l'augmentation du deuxième couple partiel (M') sont effectuées en commandant à l'avance des couples de consigne (M*, M'*).

12. Procédé pour faire fonctionner selon la revendication 11, **caractérisé en ce que** les couples de consigne (M*, M'*) augmentent resp. diminuent linéairement.
